# FASCICULE DE BREVET EUROPEEN

(11) **EP 0 859 443 B1**
(45) Date de publication et mention de la délivrance du brevet: **15.12.2004**
(21) Numéro de dépôt: 98410005.7
(22) Date de dépôt: 27.01.1998
(51) Int. Cl.: H02H 3/08

(54) **Relais et procédé de protection**
Schützrelais und Verfahren
Protective relay and method

(30) Priorité: 10.02.1997 FR 9701698
(43) Date de publication de la demande: 19.08.1998
(73) Titulaire: Schneider Electric Industries SAS, 92500 Rueil-Malmaison (FR)
(72) Inventeur: Serpinet, Marc, 38050 Grenoble cedex 09 (FR); Previeux, Laurent, 38050 Grenoble cedex 09 (FR); Favre, Jean-Jacques, 38050 Grenoble cedex 09 (FR)
(74) Mandataire: Jouvray, Marie-Andrée

(56) Documents cités:
- US-A- 4 683 515
- US-A- 5 661 384
- DATABASE WPI Section PQ, Week 9404 Derwent Publications Ltd., London, GB; Class Q14, AN 94-033594 XP002044396 & SU 1 786 585 A (ROST RAIL ENG INST) , 7 janvier 1993
- PATENT ABSTRACTS OF JAPAN vol. 017, no. 152 (E-1340), 25 mars 1993 & JP 04 317511 A (MITSUBISHI ELECTRIC CORP), 9 novembre 1992,

## Description

L'invention concerne un relais de protection comportant une unité de traitement connectée à des moyens de mesure fournissant des signaux représentatifs d'échauffements provoqués par la circulation de courants dans des conducteurs électriques, et des moyens de réglage connectés à l'unité de traitement et fournissant des valeurs représentatives de seuils de protection.

Les relais de protection connus, tels que des déclencheurs électroniques pour disjoncteurs, permettent l'ouverture de contacts électriques pour protéger une installation. Les déclencheurs comportent généralement des capteurs de courant connectés à une unité de traitement qui effectue des fonctions de protection. L'unité de traitement commande un relais de déclenchement lorsqu'un signal fourni par les capteurs de courant dépasse un seuil pendant une durée prédéterminée.

Certains déclencheurs comportent des capteurs de température connectés à l'unité de traitement. Ces capteurs fournissent un signal de température pour permettre l'interruption d'un courant lorsqu'un échauffement excessif se produit dans le disjoncteur.

Des capteurs de température peuvent aussi être utilisés pour déterminer la mémoire thermique d'une installation. Un tel dispositif, décrit dans le brevet européen EP 0 421 892 B, propose une simulation du refroidissement après ouverture des contacts du disjoncteur.

Un document référencé "DATABASE WPI Section PQ, Week 9404 Derwent Publications Ltd, London, GB; Class Q14, AN 94-033594 XP002044396 & SU 1 786 585 A (ROST RAIL ENG INST), 7 janvier 1993" décrit une méthode de protection de conducteur de réseau électrique contre une surchauffe.

Un document référencé "PATENT ABSTRACTS OF JAPAN vol. 017, no. 152 (E-1340), 25 mars 1993 & JP 04 317511 A (MITSUBISHI ELECTRIC CORP), 9 novembre 1992" décrit un contrôleur de charge pour une ligne de transmission. Dans ce document, le contrôleur reçoit des signaux d'un capteur de température ambiante et des signaux d'un capteur de courant.

Des fonctions de déclenchement long retard peuvent utiliser des signaux de température mais les seuils de déclenchement ne sont pas très précis et les possibilités de réglage des temporisations ne sont pas très étendues. Ainsi, les déclencheurs combinent souvent une protection par mesure de courant très précise et une protection par mesure de température complémentaire ou redondante.

De plus, les fonctions de déclenchement connues utilisant des signaux de température ne permettent pas une protection court retard.

L'invention a pour but un relais et un procédé de protection utilisant des signaux de température pour des fonctions de déclenchement améliorées.

Dans un relais selon l'invention, l'unité de traitement comporte des premiers moyens de protection thermique connectés à des premiers moyens de réglage fournissant un premier signal de réglage représentatif d'un premier seuil, et à des premiers moyens de mesure en contact thermique avec au moins un conducteur et fournissant un premier signal représentatif de la température dudit conducteur,
lesdits premiers moyens de protection fournissant un signal de déclenchement lorsqu'une valeur représentative de la variation du premier signal de température dépasse une valeur représentative du premier signal de réglage représentatif du premier seuil.

Dans un mode de réalisation préférentiel, l'unité de traitement comporte des seconds moyens de protection thermique connectés à des seconds moyens de réglage fournissant un second signal de réglage représentatif d'un second seuil, aux premiers moyens de mesure, et à des seconds moyens de mesure éloignés des conducteurs à protéger et fournissant une seconde valeur de température représentative d'une température ambiante,
lesdits seconds moyens de protection fournissant un signal de déclenchement lorsqu'une valeur représentative de la différence de température entre la première valeur de température fournie par les premiers moyens de mesure et la seconde valeur de température fournie par les seconds moyens de mesure dépasse une valeur représentative du second signal de réglage représentatif du second seuil .

De préférence, les seconds moyens de protection comportent des moyens de détermination d'une grandeur représentative d'une différence de température ayant des entrées connectées aux premiers et aux seconds moyens de mesure et une sortie fournissant la valeur représentative de la différence entre la première valeur de température fournie par les premiers moyens de mesure et la seconde valeur de température fournie par les seconds moyens de mesure.

Selon une variante, les premiers moyens de protection sont connectés à la sortie des moyens de détermination d'une grandeur représentative d'une différence de température.

Selon un mode de réalisation particulier, l'unité de traitement comporte des troisièmes moyens de protection thermique connectés aux premiers moyens de mesure, et fournissant un signal de déclenchement lorsqu'une valeur représentative de la température fournie par les premiers moyens dépasse un troisième seuil prédéterminé.

Selon un premier développement de l'invention, l'unité de traitement comporte des moyens de correction ayant des entrées connectées aux premiers moyens de réglage, aux seconds moyens de réglage et à des moyens de détermination d'une grandeur représentative d'une différence de température, et une sortie connectée aux premiers moyens de protection thermique, lesdits moyens de correction modifiant le premier signal de réglage représentatif d'un premier seuil en fonction de la valeur du second seuil et de la valeur représentative d'une différence de température.

Selon un second développement de l'invention, les premiers moyens de protection thermique comportent des moyens de calcul différentiel recevant un signal d'entrée représentatif du signal de température fourni par les premiers moyens de mesure et fournissant un signal de sortie représentatif de la variation du signal d'entrée.

De préférence, les moyens de calcul différentiel comportent un échantillonneur recevant le signal d'entrée, un registre tampon connecté à l'échantillonneur pour mémoriser un nombre prédéterminé de derniers échantillons, un détecteur de minimum connecté au tampon et fournissant la valeur d'un échantillon mémorisé de plus faible valeur, et des moyens de calcul de différence ayant des entrées connectées à l'échantillonneur et au détecteur de minimum et une sortie fournissant le signal de sortie représentatif de la différence entre le dernier échantillon et la valeur minimale des derniers échantillons mémorisés.

Un procédé selon l'invention comporte :
- une étape de mesure de température d'au moins un conducteur,
- une étape de calcul de la variation de la température d'au moins un conducteur, et
- une étape de contrôle de déclenchement en fonction de la valeur de ladité variation de la température.

Un développement du procédé comporte :
- une étape de mesure d'une température ambiante,
- une étape de calcul de la différence entre des valeurs de la température d'au moins un conducteur et des valeurs de la température ambiante, et
- une étape de contrôle de déclenchement en fonction de valeur de différence de température.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- La figure 1 représente un schéma d'un relais de protection connu,
- La figure 2 représente un schéma d'un relais de protection selon l'invention,
- Les figures 3 et 4 représentent deux schémas d'unités de traitement d'un relais selon l'invention,
- La figure 5 représente des moyens de correction pouvant être mis en oeuvre dans des relais selon l'invention,
- La figure 6 représente des moyens de calcul de différence pouvant être mis en oeuvre dans des relais selon l'invention,
- La figure 7 représente un organigramme de fonctionnement d'une unité de traitement d'un relais selon l'invention,
- Les figures 8a à 8d illustrent des signaux représentatifs d'un fonctionnement d'un relais selon l'invention.

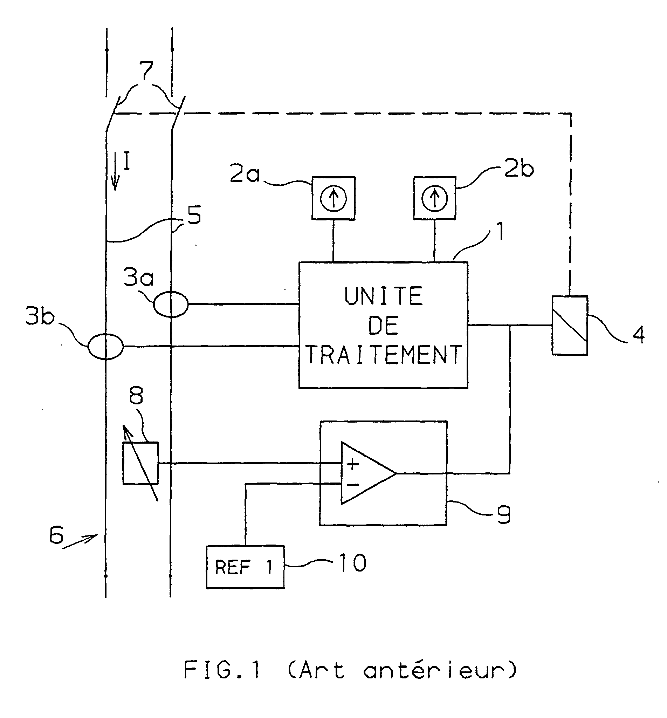

Un relais de protection de type connu, représenté sur la figure 1, comporte une unité de traitement 1 connectée à des organes de réglage 2a et 2b, à des capteurs de courant 3a et 3b et à un relais de déclenchement 4. Les capteurs de courant sont disposés sur des conducteurs principaux 5 d'un réseau 6 à protéger.

Des contacts 7 connectés en série avec les conducteurs principaux 5 sont commandés en ouverture par le relais de déclenchement. Lorsqu'un signal de courant fourni par les capteurs dépasse des seuils et des temporisations prédéterminés par les organes 2a et 2b de réglage, l'unité de traitement commande le relais 4 pour provoquer l'ouverture des contacts 7 et l'interruption d'un courant I dans le réseau 6.

Lorsque le relais de protection est un déclencheur, installé notamment dans un disjoncteur, un capteur 8 de température fournit un signal représentatif de l'échauffement dudit disjoncteur. Des moyens de comparaison 9, connectés au capteur de température et à une référence 10 commande le relais de déclenchement si le signal de température dépasse un seuil fourni par la référence 10.

Dans le schéma de la figure 1, une protection par mesure de courant est utilisée conjointement avec une protection par mesure de température. La protection par mesure de température est dans ce cas, utilisée essentiellement pour protéger le disjoncteur.

Dans les déclencheurs connus, la protection par mesure de température ne permet pas d'effectuer des fonctions de déclenchement thermiques long retard ni des fonctions de déclenchement court retard.

De plus, la plupart des relais de protection à mesure de courant fonctionnent sur des réseaux à courants alternatifs. Pour fonctionner sur tous les types de réseau, les relais de protection connus doivent avoir des capteurs de courant complexes et onéreux.

Dans un relais de protection selon l'invention, des protections par mesure de température permettent des fonctions de protection long retard et court retard pour des réseaux à courant continu ou alternatif.

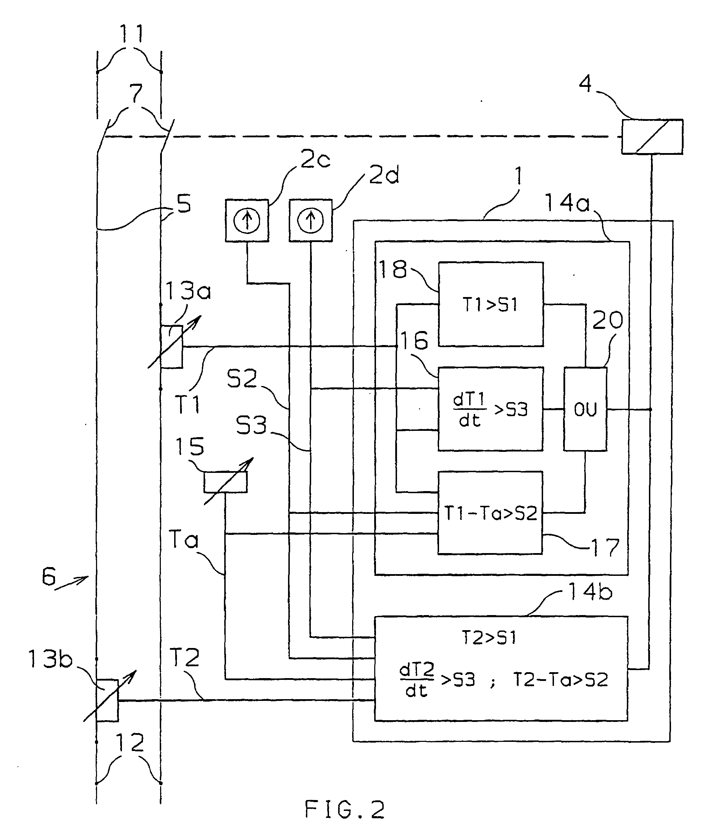

Le schéma d'un relais de protection selon un mode de réalisation de l'invention est représenté sur la figure 2. Sur ce schéma, le relais de protection est installé dans un disjoncteur comportant des bornes d'entrée 11 et des bornes de sortie 12 sur lesquelles viennent se connecter des conducteurs d'un réseau. Entre les bornes d'entrée et de sortie, des conducteurs principaux 5 sont en série avec des contacts 7.

Dans ce mode de réalisation, des capteurs de température 13a et 13b associés aux conducteurs principaux 5 sont connectés à l'unité de traitement 1. Les capteurs de courant fournissent des signaux T1 et T2 représentatifs des températures de chaque conducteur tout en garantissant un isolement électrique entre lesdits conducteurs et le relais de protection.

L'unité de traitement 1 du relais de protection comporte un groupe de fonctions de protection pour chaque conducteur. Un premier groupe 14a de fonctions de protection traite les signaux provenant du capteur 13a et un second groupe 14b traite les signaux du capteur 13b.

Un capteur de température 15, connecté à l'unité de traitement 1, fournit aux fonctions de déclenchement des groupes 14a et 14b des signaux représentatifs d'une température ambiante Ta. Le capteur 15 est disposé dans un lieu éloigné des conducteurs. Si le capteur 15 est dans un disjoncteur, il peut être disposé vers la face avant.

Des organes de réglage 2c et 2d fournissent respectivement des signaux représentatifs de seuils long retard et court retard aux fonctions de déclenchement.

Chaque groupe de fonctions de déclenchement comporte un circuit de protection court retard 16 recevant un signal de température T1 fourni par un capteur, par exemple, le capteur 13a, et un signal de seuil S3 court retard fourni par l'organe de réglage 2d.

Le circuit de protection court retard 16 fournit un ordre de déclenchement à travers une porte 20 lorsque la variation du signal de température dépasse le seuil S3 court retard. La variation du signal de température peut être déterminée en effectuant la dérivée du signal de température T1.

La fonction de déclenchement long retard est effectuée par un circuit de protection 17 recevant le signal de température T1 fourni par un capteur associé aux conducteurs, un signal de seuil S2 long retard fourni par l'organe de réglage 2c, et un signal de température ambiante Ta fourni par le capteur de température 15.

Le circuit de protection long retard 17 fournit un ordre de déclenchement au relais à travers la porte 20, lorsqu'une différence de température entre la température d'un conducteur 5 et la température ambiante dépasse une valeur de seuil de l'organe de réglage 2c long retard. Pour effectuer cette fonction de protection long retard, le circuit 17 calcule la différence entre les signaux T1 et Ta fournis par les capteurs respectivement 13a et 15 puis compare cette différence avec le signal de seuil S2 fourni par l'organe de réglage 2c.

Une troisième fonction de déclenchement permet de protéger les conducteurs 5 contre une élévation excessive de la température. Cette fonction est assurée par un circuit de protection 18 connecté au capteur de température 13a associé au conducteur. Ce circuit donne un ordre de déclenchement au relais 4 à travers la porte 20, lorsque le signal de température T1 dépasse un seuil S1 prédéterminé.

La constitution et le fonctionnement du groupe 14b sont identiques à ceux du groupe 14a décrit ci-dessus. Le signal de température du conducteur du groupe de fonctions 14b est fourni par le capteur 13b.

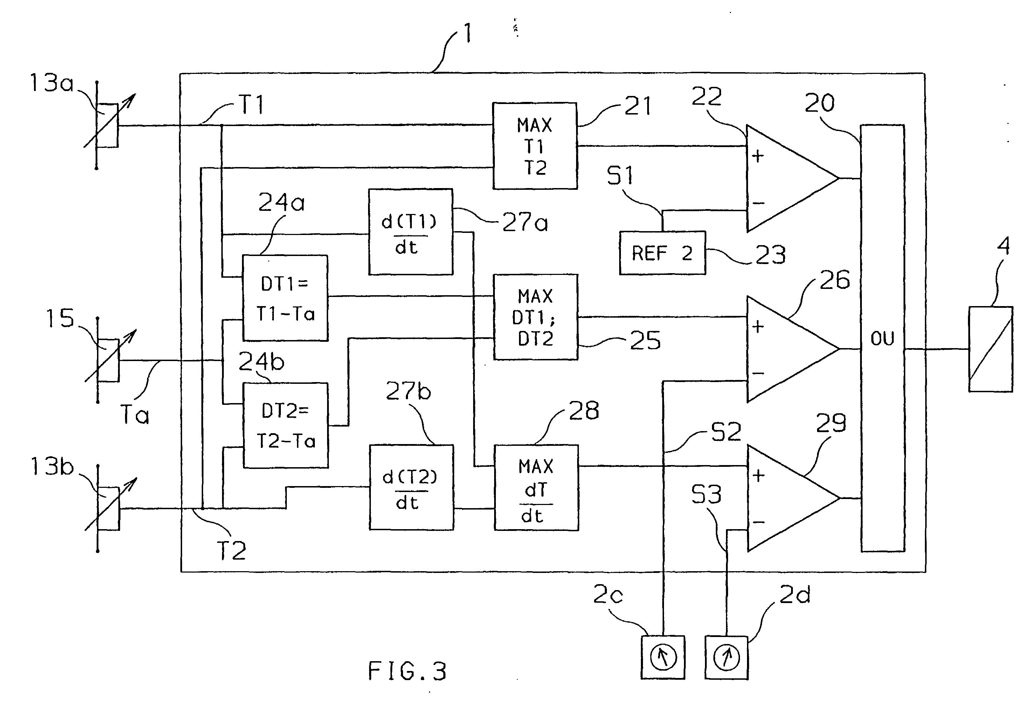

La figure 3 montre le schéma bloc d'une unité de traitement où les signaux de température des capteurs 13a et 13b sont traités de manière groupée. Dans cette unité de traitement des détecteurs de valeurs maximales permettent de réduire le nombre total de circuits.

L'unité de traitement de la figure 3 comporte un premier détecteur de maximum 21 connecté aux capteurs 13a et 13b est fournissant sur une sortie, un signal représentatif de la valeur maximale des valeurs de température respectivement T1 et T2 fournies par lesdits capteurs. Un comparateur 22 est connecté à la sortie du détecteur de maximum 21 et à une référence 23 fournissant le seuil de déclenchement S1. Si l'une des températures T1 ou T2 dépasse la valeur du seuil S1, le comparateur 22 envoie un signal de déclenchement au relais 4 à travers la porte 20.

Pour les fonctions de déclenchement long retard, l'unité de traitement comporte un premier circuit 24a de calcul de différence connecté aux capteurs 13a et 15, un second circuit 24b de calcul de différence connecté aux capteurs 13b et 15, et un second détecteur de maximum 25 connecté à des sorties des premier et second circuits 13a et 13b de calcul de différence. Un comparateur 26 a une première entrée connectée à une sortie du détecteur 25 et une seconde entrée connectée à l'organe de réglage 2c fournissant un signal de seuil S2 long retard.

Le circuit 24a calcule une différence de température DT1 entre la valeur de température T1 fournie par le capteur 13a et la valeur de température ambiante Ta fournie par le capteur 15. Le circuit 24b calcule une différence de température DT2 entre la valeur de température T2 fournie par le capteur 13b et la valeur de Ta. Ainsi DT1 représente T1 - Ta et DT2 représente T2 - Ta. DT1 et DT2 sont appliquées aux entrées du détecteur 25. Si une des valeurs DT1 ou DT2 dépasse le seuil S2, le comparateur 26 envoie un signal de déclenchement au relais 4 à travers la porte 20.

Pour les fonctions de déclenchement court retard, l'unité de traitement comporte un premier circuit 27a et un second circuit 27b de calcul de variation de température. La variation de température est calculée en effectuant la dérivée des signaux de température fournis par les détecteurs 13a et 13b. Le circuit 27a, connecté au capteur 13a, calcule une variation dT1/dt de la température T1 par rapport au temps dt, et le circuit 27b connecté au capteur 13b calcule une variation dT2/dt de la température T2. Les sorties de chaque circuit 27a, et 27b, sont connectées à des entrées d'un troisième détecteur de maximum 28. Un comparateur 29 a une première entrée connectée à une sortie du détecteur 28 et une seconde entrée connectée à l'organe de réglage 2d fournissant un signal de seuil S3 court retard.

Le détecteur 28 fournit la valeur maximale des variations dT1/dt ou dT2/dt au comparateur 29. Si une des variations de T1 (dT1/dt) ou de T2 (dT2/dt) dépasse le seuil S3, le comparateur 29 fournit un signal de déclenchement au relais 4 à travers la porte 20.

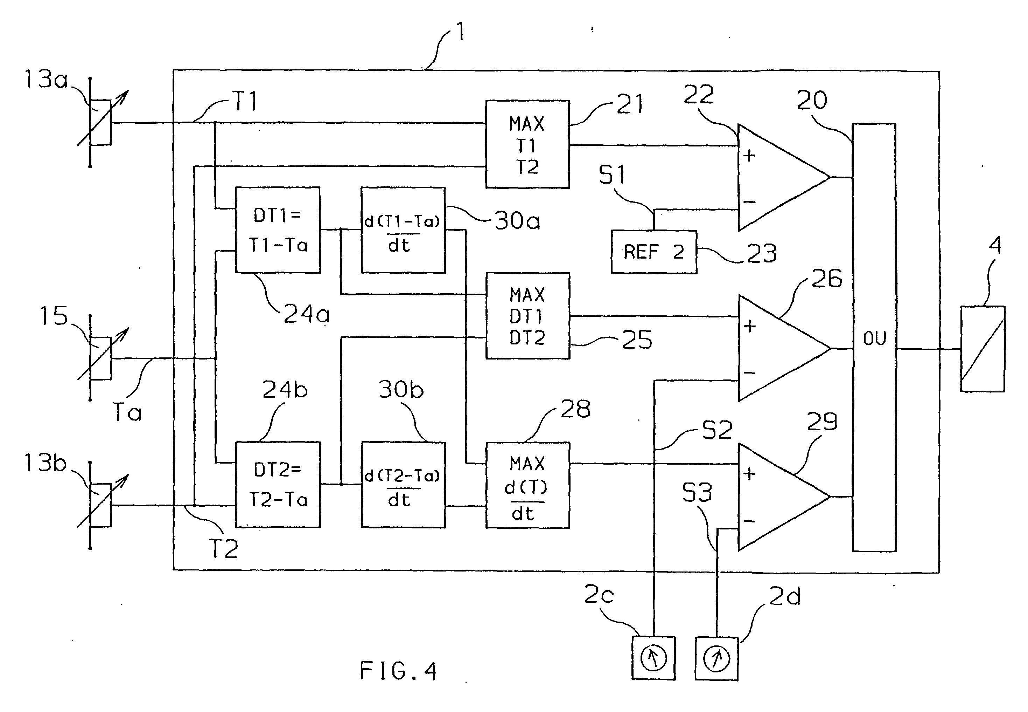

La figure 4 montre un autre mode de réalisation d'une unité de traitement d'un relais selon l'invention. Sur ce schéma, les circuits 27a et 27b ont été remplacés par d'autres circuits 30a et 30b de calcul de variation. Le circuit 30a a une entrée connectée à la sortie du circuit 24a, et le circuit 30b a une entrée connectée à la sortie du circuit 24b. Des sorties de chaque circuit 30a et 30b sont connectées aux entrées du troisième détecteur de maximum 28.

Dans ce mode de réalisation, les circuits 30a et 30b de calcul de variation utilisent les valeurs des différences de température respectivement DT1 et DT2. Lorsqu'un courant de surcharge ou de court circuit traverse ledit conducteur, la température ambiante varie moins rapidement que la température d'un conducteur. Ainsi, le calcul de la variation d(T1 - Ta)/dt ou d(T2 - Ta)/dt de température d'une grandeur représentative de la différence de température DT1 ou DT2 est peu différent du calcul de la variation d(T1)/dt ou d(T2)/dt de température du conducteur T1 ou T2.

Cependant, le calcul de la variation de d(T1 - Ta)/dt ou d(T2 - Ta)/dt se fait sur des valeurs plus faibles (T1 - Ta < T1 et T2 - Ta < T2) et la précision du calcul peut être plus élevée. De plus, les valeurs étant plus faibles, les calculs sont plus rapides et occupent moins de place en mémoire lorsque ces fonctions sont faites par des circuits programmés.

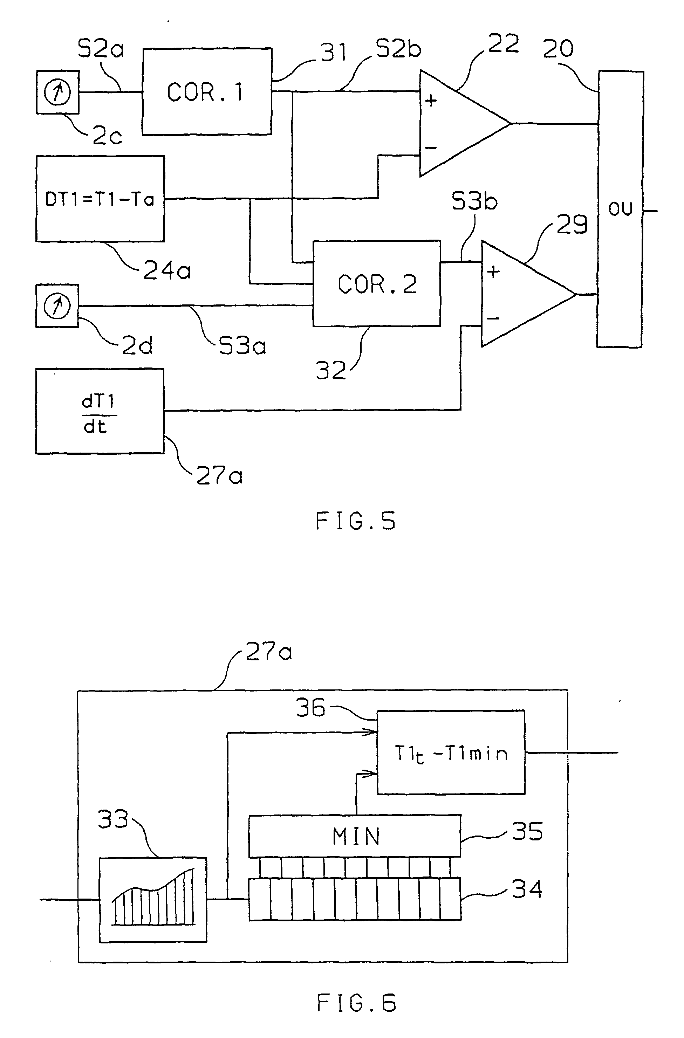

Les écarts de température entre la température d'un conducteur et la température ambiante d'un disjoncteur ne sont pas proportionnels au courant qui traverse ledit conducteur. Pour prendre en compte cette réponse non linéaire, l'organe 2c fournissant un seuil de protection long retard doit, de préférence, fournir des signaux représentatifs de l'échauffement que produit une valeur de courant affichée sur ledit organe 2c. Si l'organe fournit des signaux représentatifs de courant, un circuit de conversion 31 convertit les signaux S2a représentatifs de courant en signaux S2b représentatifs d'échauffement. Sur la figure 5, le circuit de conversion 31 est connecté entre l'organe 2c et le comparateur. Sur ce schéma, le comparateur compare le signal de différence de température DT1 fourni par le circuit 24a et le signal de seuil corrigé S2b.

Les variations de température, lorsqu'un conducteur électrique est froid lors de l'apparition d'un courant de surcharge ou de court-circuit, sont supérieures à des variations de température lorsque ledit conducteur est déjà chaud. Pour tenir compte de la situation initiale du disjoncteur lors de l'apparition d'un défaut électrique, l'unité de traitement comporte un circuit de correction 32.

Ainsi, pour un seuil court retard prédéterminé au moyen de l'organe 2d, le signal de seuil de déclenchement S3 fourni au comparateur sera plus élevé si le conducteur est froid et plus faible si le conducteur est chaud.

Sur le schéma de la figure 5, un circuit de correction 32 est connecté entre l'entrée du comparateur 29 recevant la valeur de seuil pour un déclenchement court retard sur la variation de température, et l'organe de réglage 2d. Le circuit 32 est également connecté au circuit 31 pour recevoir un signal représentatif du seuil long retard, par exemple S2b, et au circuit 24a pour recevoir des signaux représentatifs des températures du conducteur T1 et de la température ambiante Ta. Ainsi, le circuit de correction 32 reçoit un signal de seuil S3a de l'organe 2d et fournit une valeur de seuil corrigée S3b au comparateur. La correction s'effectue en fonction de la valeur de seuil long retard et de la température du conducteur. L'utilisation de la température ambiante Ta et de la différence de température T1 - Ta améliore la précision de la correction.

Dans d'autres modes de réalisation, le circuit de correction peut être relié directement à l'organe de réglage 2c pour recevoir la valeur de seuil long retard et au capteur 13a ou 13b pour avoir la valeur de température des conducteurs.

La figure 6 montre un mode de réalisation d'un circuit 27a de calcul de variation. Ce schéma peut être identique pour les circuits 27b, 30a et 30b. Le circuit de calcul de variation comporte en entrée un échantillonneur 33 pour échantillonner le signal d'entrée. Un circuit de mémorisation 34, connecté à une sortie de l'échantillonneur, mémorise un nombre prédéterminé de derniers échantillons de signaux. Un circuit 35 de détection de minimum est connecté au circuit de mémorisation. Ce circuit 35 fournit sur sa sortie la valeur de la plus basse valeur parmi les derniers échantillons mémorisés. Puis, un circuit de calcul 36 ayant une première entrée connectée à l'échantillonneur et une seconde entrée connectée au circuit 35, calcule la différence entre la valeur d'un échantillon Tlt que fournit l'échantillonneur et la valeur la plus basse T1min d'un des derniers échantillons mémorisés.

Dans ce mode de réalisation le circuit 27a permet une plus grande dynamique de mesure et une plus grande précision lorsque les variations de température sont très faibles. Par exemple, si le nombre d'échantillons mémorisé est de 10, une variation lente de température peut être détectée avec précision au bout de dix échantillons, l'écart entre le premier et le dixième échantillon étant supérieur à l'écart entre deux échantillons consécutifs. Les variations rapides sont automatiquement détectées dès les premiers échantillons puisque l'écart est grand. Ainsi, pour de forts courants dans les conducteurs, la protection court retard permet un déclenchement rapide.

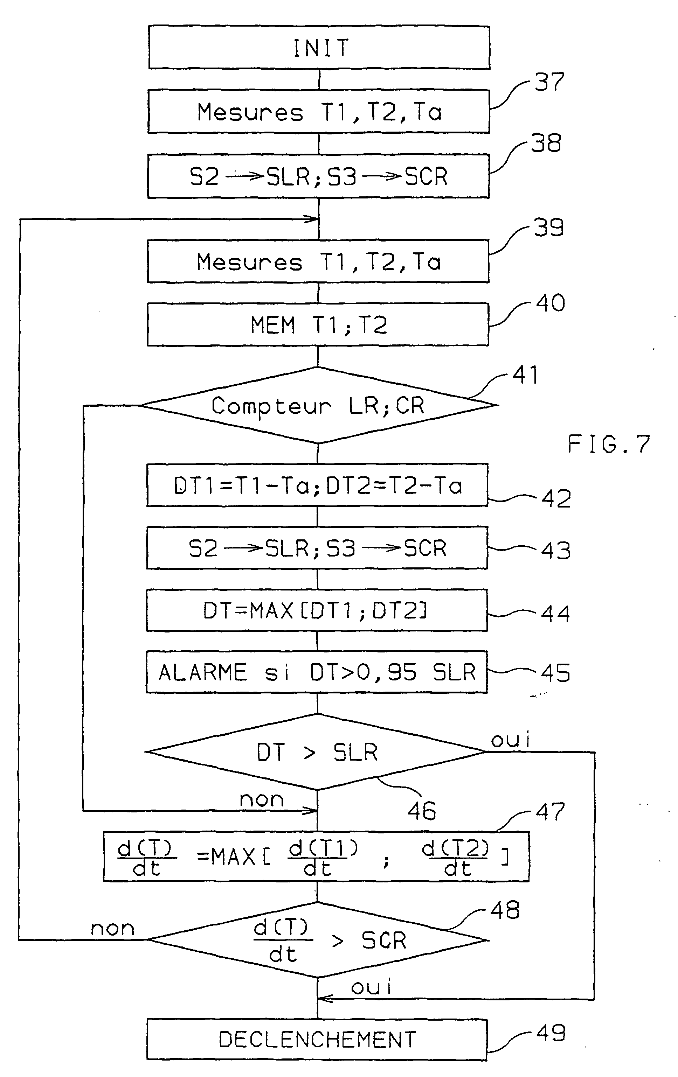

Les fonctions de déclenchement sont de préférence réalisées sous une forme programmée dans des microprocesseurs ou des micro-contrôleurs. Un organigramme représenté sur la figure 7 montre des procédés de protection pouvant être mis en oeuvre dans des relais selon l'invention.

Lors d'une phase d'initialisation, l'unité de traitement échantillonne les valeurs des signaux de température T1, T2, Ta (étape 37) et lit les valeurs de seuil S2 et S3 pour déterminer des valeurs de seuil long retard SLR et des valeurs de seuils court retard SCR (étape 38).

Ensuite, à chaque cycle de fonctionnement, les valeurs de température T1, T2 Ta sont échantillonnées (étape 39) et les derniers échantillons de T1 et T2 sont mémorisés lors d'une étape 40. Puis à une étape 41, un compteur permet de compter les traitements court retard par rapport au traitement long retard. Ainsi, les traitements court retard peuvent être plus fréquents que les traitements long retard pour accélérer le déclenchement court retard en cas de fort courant de court-circuit.

Pendant le traitement des fonctions de protection thermiques long retard, à une étape 42, les différences de température DT1 = T1 - Ta et DT2 = T2 - Ta sont calculées. Puis, à une étape 43 les seuils long retard SLR et court retard SCR sont recalculés. Les seuils sont calculés à chaque boucle long retard, car les réglages des organes 2c et 2d peuvent changer ainsi que les températures initiales des conducteurs. A une étape 44, une valeur maximale DT des différences de température DT1 et DT2 est détectée. Puis, à une étape 45, une alarme est donnée si la valeur maximale DT dépasse une valeur de seuil proportionnelle au seuil long retard SLR, par exemple si DT est supérieure à 0,95 SLR.

A la fin du traitement long retard (étape 46), la valeur maximale DT de la différence de température est comparée au seuil long retard (SLR). Si DT est supérieure à SLR, un ordre de déclenchement est envoyé au relais 4 lors d'une dernière étape 49. Dans le cas contraire, une étape 47 permet de poursuivre le traitement et effectuer la fonction court retard.

Pendant l'étape 47, l'unité de traitement calcule les variations d(T1)/dt et d(T2)/dt des valeurs des températures des conducteurs et détermine une valeur d(T)/dt maximale entre les deux valeurs de variations. Le calcul peut être fait comme dans le schéma de la figure 6 en utilisant la valeur du dernier échantillon Tlt et la valeur minimale des derniers échantillons mémorisés à l'étape 40.

Ensuite, à une étape 48, la valeur maximale d(T)/dt des variations est comparée au seuil SCR court retard. Si d(T)/dt est supérieure à SCR, un ordre de déclenchement est envoyé à l'étape 49. Sinon, le traitement reprend à l'étape 39 par une acquisition d'échantillons de valeurs de température T1, T2 et Ta, puis par une mémorisation à l'étape 40.

Si à l'étape 41 le traitement des fonctions long retard n'est pas requis, le traitement reprend à l'étape 47. Par exemple, le compteur à l'étape 41 peut aiguiller le traitement vers les fonctions long retard lorsqu'il a effectué huit fois les fonctions court retard.

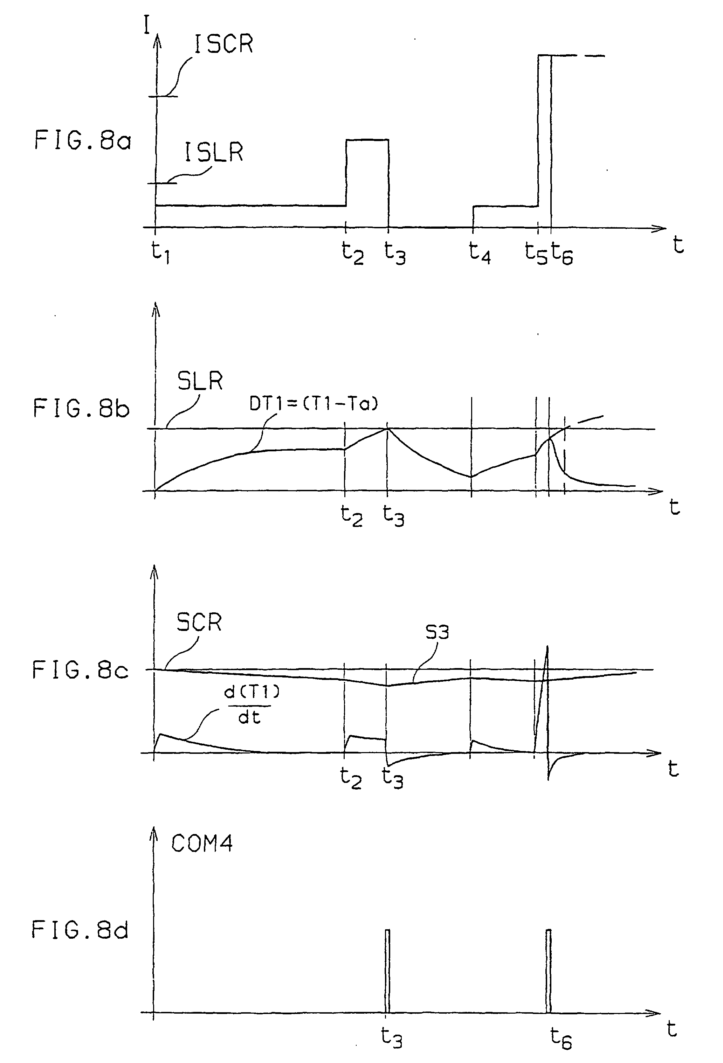

Les figures 8a à 8d illustrent le fonctionnement d'un relais de protection selon un mode de réalisation de l'invention. La courbe de la figure 8a représente un courant I circulant dans un conducteur 5 du réseau. Sur la courbe de la figure 8b est représentée la différence de température entre un conducteur et la température ambiante DT1 = (T1 - Ta) provoquée par la circulation du courant I. La courbe de la figure 8c représente la variation de température d(T1)/dt du conducteur ; elle correspond à la dérivée par rapport au temps de la mesure de température T1. Enfin, la figure 8d représente des ordres de déclenchement COM4 envoyés au relais 4.

A l'instant t1, le courant I commence à circuler. Sa valeur est inférieure à un seuil ISLR pour lequel un relais de protection ne doit pas déclencher l'ouverture d'un disjoncteur. La différence de température DT1 (T1-Ta) est faible au départ puis elle augmente et se stabilise à une valeur inférieure à un seuil thermique de déclenchement long retard SLR. La variation d(T1)/dt est forte au début puis elle décroît lorsque la température est stabilisée.

A un instant t2, le courant I dépasse le seuil ISLR. La différence de température DT1 augmente et dépasse le seuil SLR à un instant t3. Un ordre de commande COM4 est envoyé au relais de déclenchement pour interrompre le courant I. Ensuite, la différence de température DT1 décroît puisque le courant ne circule plus dans le conducteur.

Ensuite, à un instant t4, le courant I recommence à circuler et la différence de température DT1 augmente. Puis, à un instant t5, le courant augmente et dépasse de seuil ISCR, la différence DT1 augmente alors plus rapidement, et la variation de T1 (d(T1)/dt) est très élevée. A un instant t6, la variation d(T1)/dt dépasse le seuil SCR de déclenchement court retard et un ordre de déclenchement COM4 est envoyé au relais 4.

Sur la figure 8c, une courbe représentative d'un seuil S3 montre une correction possible du seuil court retard en fonction de la valeur de la température T1 du conducteur.

Les modes de réalisation décrits ci-dessus et représentés sur les figures 2, 3, 4 sont particulièrement adaptés aux réseaux à courant continu ayant un conducteur pour la polarité positive et un conducteur pour la polarité négative. Cependant, l'invention s'applique aussi bien à des relais de protection fonctionnant en courant alternatif, ayant un ou plusieurs pôles protégés pour des réseaux monophasés ou triphasés.

L'unité de traitement décrite dans les figures comporte deux groupes de fonctions de déclenchement, un pour chaque conducteur. Mais, l'invention s'applique aussi pour un nombre différent de groupe par exemple un, trois, ou quatre. Il est aussi possible d'utiliser plusieurs capteurs de température par conducteur à protéger.

Les circuits utilisés pour l'unité de traitement peuvent être analogiques, numériques ou programmés. Les capteurs de température sont de préférence du type à semi conducteurs, mais d'autres capteurs tels que des thermistances ou des thermocouples peuvent également être utilisés.

## Revendications

1. Relais de protection comportant une unité de traitement (1) connectée à des moyens de mesure fournissant des signaux représentatifs d'échauffements provoqués par la circulation de courants (I) dans des conducteurs (5) électriques, et des moyens (2a-2d) de réglage connectés à l'unité de traitement et fournissant des valeurs représentatives de seuils de protection,
relais de protection **caractérisé en ce que** l'unité de traitement comporte des premiers moyens (16, 27a, 27b, 28, 29, 30a, 30b, 47, 48) de protection thermique connectés à des premiers moyens (2d) de réglage fournissant un premier signal (S3) de réglage représentatif d'un premier seuil, et à des premiers moyens de mesure (13a, 13b) en contact thermique avec au moins un conducteur (5) et fournissant un premier signal (T1, T2) représentatif de la température dudit conducteur,
lesdits premiers moyens de protection fournissant un signal de déclenchement lorsque une valeur représentative de la variation (d(T1)/dt, d(T2)/dt) du premier signal de température dépasse une valeur représentative du premier signal (S3, S3b, SCR) de réglage représentatif du premier seuil.

2. Relais de protection selon la revendication 1 **caractérisé en ce que** l'unité de traitement comporte des seconds moyens (17, 24a, 24b, 25, 26, 42, 44, 46) de protection thermique connectés à des seconds moyens de réglage (2c) fournissant un second signal (S2) de réglage représentatif d'un second seuil, aux premiers moyens (13a, 13b) de mesure, et à des seconds moyens (15) de mesure éloignés des conducteurs à protéger et fournissant une seconde valeur de température (Ta) représentative d'une température ambiante,
lesdits seconds moyens de protection fournissant un signal de déclenchement lorsque une valeur représentative de la différence de température (DT1, (T1-Ta), DT2, (T2-Ta)) entre la première valeur de température (T1, T2) fournie par les premiers moyens de mesure et la seconde valeur de température (Ta) fournie par les seconds moyens de mesure dépasse une valeur représentative (S2, S2b, SLR) du second signal de réglage représentatif du second seuil.

3. Relais de protection selon la revendication 2 **caractérisé en ce que** les seconds moyens de protection comportent des moyens de détermination (24a, 24b) d'une grandeur (DT1, DT2) représentative d'une différence de température ayant des entrées connectées aux premiers et aux seconds moyens (13a, 13b, 15) de mesure et une sortie fournissant la valeur représentative ((T1-Ta), (T2-Ta)) de la différence entre la première valeur de température (T1, T2) fournie par les premiers moyens de mesure et la seconde valeur de température (Ta) fournie par les seconds moyens de mesure.

4. Relais de protection selon la revendication 3 **caractérisé en ce que** les premiers moyens (30a, 30b) de protection sont connectés à la sortie des moyens de détermination (24a, 24b) d'une grandeur représentative d'une différence de température.

5. Relais de protection selon l'une quelconque des revendications 1 à 4 **caractérisé en ce que** l'unité de traitement comporte des troisièmes moyens (18, 21, 22) de protection thermique connectés aux premiers moyens (13a, 13b) de mesure, et fournissant un signal de déclenchement lorsque une valeur représentative de la température (T1, T2) fournie par les premiers moyens dépasse un troisième seuil (S1) prédéterminé.

6. Relais de protection selon l'une quelconque des revendications 1 à 5 **caractérisé en ce que** l'unité de traitement comporte des moyens de correction (32) ayant des entrées connectées aux premiers moyens (2d) de réglage, aux seconds moyens (2c) de réglage et à des moyens de détermination (24a, 24b) d'une grandeur représentative d'une différence de température, et une sortie connectée aux premiers moyens de protection thermique, lesdits moyens de correction modifiant le premier signal de réglage (S3, S3a, S3b) représentatif d'un premier seuil en fonction de la valeur du second seuil et de la valeur représentative d'une différence de température.

7. Relais de protection selon l'une quelconque des revendications 1 à 6 **caractérisé en ce que** les premiers moyens (16) de protection thermique comportent des moyens de calcul différentiel (27a, 27b, 30a, 30b, 47) recevant un signal d'entrée représentatif du signal de température (T1, T2) fourni par les premiers moyens (13a, 13b) de mesure et fournissant un signal de sortie (d(T1)/dt, d(T2)/dt) représentatif de la variation du signal d'entrée.

8. Relais de protection selon la revendication 7 **caractérisé en ce que** les moyens de calcul différentiel (27a, 27b, 30a, 30b) comportent un échantillonneur (33) recevant le signal d'entrée, un registre tampon (34) connecté à l'échantillonneur pour mémoriser un nombre prédéterminé de derniers échantillons, un détecteur (35) de minimum connecté au tampon et fournissant la valeur d'un échantillon mémorisé de plus faible valeur, et des moyens de calcul (36) de différence ayant des entrées connectées à l'échantillonneur et au détecteur de minimum et une sortie fournissant le signal de sortie (d(T1)/dt, d(T2)/dt) représentatif de la différence entre le dernier échantillon et la valeur minimale des derniers échantillons mémorisés.

9. Procédé de protection thermique pouvant être mis en oeuvre dans un relais selon l'une quelconque des revendications 1 à 8 **caractérisé en ce qu'**il comporte :
- une étape (37, 39) de mesure de température d'au moins un conducteur,
- une étape (47) de calcul de la variation de la température d'au moins un conducteur, et
- une étape (48) de contrôle de déclenchement en fonction de la valeur de ladite variation de la température.

10. Procédé de protection thermique selon la revendication 9 **caractérisé en ce qu'**il comporte :
- une étape (37, 39) de mesure d'une température ambiante,
- une étape (42) de calcul de la différence entre des valeurs de la température d'au moins un conducteur et des valeurs de la température ambiante, et
- une étape (46) de contrôle de déclenchement en fonction de valeur de différence de température.

## Claims

1. Protection relay comprising a processing unit (1) connected to measuring means supplying signals representative of heat rises caused by the flow of currents (I) in electrical conductors (5), and setting means (2a-2d) connected to the processing unit and supplying values representative of protection thresholds,
protection relay **characterized in that** said processing unit comprises first thermal protection means (16, 27a, 27b, 28, 29, 30a, 30b, 47, 48) connected to first setting means (2d) supplying a first setting signal (S3) representative of a first threshold, and to first measuring means (13a, 13b) in thermal contact with at least one conductor (5) and supplying a first signal (T1, T2) representative of the temperature of said conductor,
said first protection means supplying a tripping signal when a value representative of the variation (d(T1/dt, d(T2/dt) of the first temperature signal exceeds a value representative of the first setting signal (S3, S3b, SCR) representative of the first threshold.

2. Protection relay according to claim 1 **characterized in that** the processing unit comprises second thermal protection means (17, 24a, 24b, 25, 26, 42, 44, 46) connected to second setting means (2c) supplying a second setting signal (S2) representative of a second threshold, to the first measuring means (13a, 13b), and to second measuring means (15) at a distance from the conductors to be protected and supplying a second temperature value (Ta) representative of an ambient temperature,
said second protection means supplying a tripping signal when a value representative of the temperature difference (DT1, (T1-Ta), DT2, (T2-Ta)) between the first temperature value (T1, T2) supplied by the first measuring means and the second temperature value (Ta) supplied by the second measuring means exceeds a value (S2, S2b, SLR) representative of the second setting signal representative of the second threshold.

3. Protection relay according to claim 2 **characterized in that** the second protection means comprise means (24a, 24b) for determining a quantity (DT1, DT2) representative of a temperature difference having inputs connected to the first and second measuring means (13a, 13b, 15) and an output supplying the value ((T1-Ta), (T2-Ta)) representative of the difference between the first temperature value (T1, T2) supplied by the first measuring means and the second temperature value (Ta) supplied by the second measuring means.

4. Protection relay according to claim 3 **characterized in that** the first protection means (30a, 30b) are connected to the output of the means (24a, 24b) for determining a quantity representative of a temperature difference.

5. Protection relay according to any one of the claims 1 to 4 **characterized in that** the processing unit comprises third thermal protection means (18, 21, 22) connected to the first measuring means (13a, 13b) and supplying a tripping signal when a value representative of the temperature (T1, T2) supplied by the first means exceeds a preset third threshold (S1).

6. Protection relay according to any one of the claims 1 to 5 **characterized in that** the processing unit comprises correction means (32) having inputs connected to the first setting means (2d), to the second setting means (2c) and to means (24a, 24b) for determining a quantity representative of a temperature difference, and an output connected to the first thermal protection means, said correction means modifying the first setting signal (S3, S3a, S3b) representative of a first threshold according to the value of the second threshold and the value representative of a temperature difference.

7. Protection relay according to any one of the claims 1 to 6 **characterized in that** the first thermal protection means (16) comprise means for performing differential calculus (27a, 27b, 30a, 30b, 47) receiving an input signal representative of the temperature signal (T1, T2) supplied by the first measuring means (13a, 13b) and supplying an output signal (d(T1/dt, d(T2)/dt) representative of the variation of the input signal.

8. Protection relay according to claim 7 **characterized in that** the means for performing differential calculus (27a, 27b, 30a, 30b, 47) comprise a sampler (33) receiving the input signal, a buffer register (34) connected to the sampler to store a preset number of last samples, a minimum detector (35) connected to the buffer and supplying the value of a stored sample of lowest value, and means for calculating a difference (36) having inputs connected to the sampler and to the minimum detector and an output supplying the output signal (d(T1/dt, d(T2)/dt) representative of the difference between the last sample and the minimum value of the last stored samples.

9. Thermal protection process able to be implemented in a relay according to any one of the claims 1 to 8 **characterized in that** it comprises:
- a measuring stage (37, 39) of the temperature of at least one conductor,
- a stage (47) of calculation of the temperature variation of at least one conductor, and
- a tripping control stage (48) according to the value of said temperature variation.

10. Thermal protection process according to claim 9 **characterized in that** it comprises:
- a measuring stage (37, 39) of the ambient temperature,
- a stage (42) of calculation of the difference between values of the temperature of at least one conductor and values of the ambient temperature, and
- a tripping control stage (46) according to the value of the temperature difference.

## Patentansprüche

1. Schutzrelais mit einer Verarbeitungseinheit (1), die an Meßmittel angeschlossen ist, welche die durch den Stromfluß (I) in elektrischen Leitern (5) bewirkte Erwärmung abbildende Signale liefern, sowie mit Einstellmitteln (2a-2d), die mit der Verarbeitungseinheit verbunden sind und Schutz-Ansprechwerte abbildende Signale liefern, welches Schutzrelais **dadurch gekennzeichnet ist, daß** die Verarbeitungseinheit erste Thermoschutzmittel (16, 27a, 27b, 28, 29, 30a, 30b, 47, 48) umfaßt, die mit ersten Einstellmitteln (2d), welche ein, einen ersten Ansprechwert abbildendes erstes Einstellsignal (S3) liefern, sowie mit ersten Meßmitteln (13a, 13b) verbunden sind, die mit mindestens einem Leiter (5) thermisch in Kontakt stehen und ein, die Temperatur des genannten Leiters abbildendes erstes Signal (T1, T2) liefern,
wobei die genannten ersten Schutzmittel ein Auslösesignal liefern, wenn ein die Änderung (d(T1)/dt, d(T2)/dt) des ersten Temperatursignals abbildender Wert einen Wert übersteigt, der das, den ersten Ansprechwert abbildende erste Einstellsignal (S3, S3b, SCR) abbildet.

2. Schutzrelais nach Anspruch 1, **dadurch gekennzeichnet, daß** die Verarbeitungseinheit zweite Thermoschutzmittel (17, 24a, 24b, 25, 26, 42, 44, 46) umfaßt, die mit zweiten Einstellmitteln (2c), welche ein, einen zweiten Ansprechwert abbildendes zweites Einstellsignal (S2) liefern, mit den ersten Meßmitteln (13a, 13b) sowie mit zweiten Meßmitteln (15) verbunden sind, die entfernt von den zu schützenden Leitern angeordnet sind und ein, eine Umgebungstemperatur abbildendes zweites Temperatursignal (Ta) liefern, wobei die genannten zweiten Schutzmittel ein Auslösesignal liefern, wenn ein die Temperaturdifferenz (DT1, (T1-Ta), DT2, (T2-Ta)) zwischen dem von den ersten Meßmitteln gelieferten ersten Temperaturwert (T1, T2) und dem von den zweiten Meßmitteln gelieferten zweiten Temperaturwert (Ta) einen Wert (S2, S2b, SLR) übersteigt, der das, den zweiten Ansprechwert abbildende zweite Einstellsignal abbildet.

3. Schutzrelais nach Anspruch 2, **dadurch gekennzeichnet, daß** die zweiten Schutzmittel Mittel (24a, 24b) zur Bestimmung einer, eine Temperaturdifferenz abbildenden Größe (DT1, DT2) mit an die ersten und die zweiten Meßmittel (13a, 13b, 15) angeschlossenen Eingängen sowie einem Ausgang umfassen, der den die Differenz zwischen dem von den ersten Meßmitteln gelieferten ersten Temperaturwert (T1, T2) und dem von den zweiten Meßmitteln gelieferten zweiten Temperaturwert (Ta) abbildenden Wert ((T1-Ta), (T2-Ta)) liefert.

4. Schutzrelais nach Anspruch 3, **dadurch gekennzeichnet, daß** die ersten Schutzmittel (30a, 30b) mit dem Ausgang der Mittel (24a, 24b) zur Bestimmung einer eine Temperaturdifferenz abbildenden Größe verbunden sind.

5. Schutzrelais nach irgendeinem der Ansprüche 1 bis 4, **dadurch gekennzeichnet, daß** die Verarbeitungseinheit dritte Thermoschutzmittel umfaßt, die mit den ersten Meßmitteln (13a, 13b) verbunden sind und ein Auslösesignal liefern, wenn ein Wert, der die von den ersten Mitteln gelieferte Temperatur (T1, T2) abbildet, einen bestimmten dritten Ansprechwert (S1) übersteigt.

6. Schutzrelais nach irgendeinem der Ansprüche 1 bis 5, **dadurch gekennzeichnet, daß** die Verarbeitungseinheit Korrekturmittel (32) umfaßt mit Eingängen, die mit den ersten Einstellmitteln (2d), mit den zweiten Einstellmitteln (2c) sowie mit Mitteln (24a, 24b) zur Bestimmung einer, eine Temperaturdifferenz abbildenden Größe verbunden sind, sowie mit einem Ausgang, der mit den ersten Thermoschutzmitteln verbunden ist, wobei die genannten Korrekturmittel das erste, einen ersten Ansprechwert abbildende Einstellsignal (S3, S3a, S3b) in Abhängigkeit vom Wert des zweiten Ansprechwerts und von dem eine Temperaturdifferenz abbildenden Wert verändern.

7. Schutzrelais nach irgendeinem der Ansprüche 1 bis 6, **dadurch gekennzeichnet, daß** die ersten Thermoschutzmittel (16) Differentialrechenmittel (27a, 27b, 30a, 30b, 47) umfassen, die mit einem Eingangssignal beaufschlagt werden, welches das von den ersten Meßmitteln (13a, 13b) gelieferte Temperatursignal (T1, T2) abbildet, und ein Ausgangssignal (d(T1)/dt, d(T2)/dt) liefern, das die Änderung des Eingangssignals abbildet.

8. Schutzrelais nach Anspruch 7, **dadurch gekennzeichnet, daß** die Differentialrechenmittel (27a, 27b, 30a, 30b) ein mit dem Eingangssignal beaufschlagtes Abtastglied (33), einen mit dem Abtastglied verbundenen Pufferspeicher (34) zur Speicherung einer bestimmten Anzahl von letzten Abtastwerten, einen mit dem Puffer verbundenen und den Wert eines niederwertigsten gespeicherten Abtastwerts liefernden Minimumdetektor (35) sowie Differenzberechnungsmittel (36) umfassen mit Eingängen, die mit dem Abtastglied und mit dem Minimumdetektor verbunden sind, sowie mit einem Ausgang, der das Ausgangssignal (d(T1)/dt, d(T2)/dt) liefert, welches die Differenz zwischen dem letzten Abtastwert und dem kleinsten Wert der letzten gespeicherten Abtastwerte abbildet.

9. Thermoschutzverfahren zum Einsatz in einem, nach irgendeinem der Ansprüche 1 bis 8, ausgeführten Relais, **dadurch gekennzeichnet, daß** das Verfahren
- eine Stufe (37, 39) zur Messung der Temperatur mindestens eines Leiters,
- eine Stufe (47) zur Berechnung der Temperaturänderung in mindestens einem Leiter und
- eine Stufe (48) zur Steuerung der Auslösung in Abhängigkeit vom Wert der genannten Temperaturänderung umfaßt.

10. Thermoschutzverfahren nach Anspruch 9, **dadurch gekennzeichnet, daß** es
- eine Stufe (37, 39) zur Messung einer Umgebungstemperatur,
- eine Stufe (42) zur Berechnung der Differenz zwischen dem Wert der Temperatur mindestens eines Leiters und Umgebungstemperaturwerten sowie
- eine Stufe (46) zur Steuerung der Auslösung in Abhängigkeit vom Wert der Temperaturdifferenz umfaßt.
